# EUROPÄISCHE PATENTANMELDUNG

(11) **EP 2 547 123 A1**
(43) Veröffentlichungstag der Anmeldung: **16.01.2013**
(21) Anmeldenummer: 12005097.6
(22) Anmeldetag: 10.07.2012
(51) Int. Cl.: H04R 25/00

(54) **Hörgerät mit optischer Signalübertragung und Ladesystem mit optischer Signalübertragung**

(30) Priorität: 15.07.2011 DE 102011107780
(71) Anmelder: Hansaton Akustik GmbH, 22081 Hamburg (DE)
(72) Erfinder: Kaempf, Holger, 21614 Buxtehude (DE)
(74) Vertreter: Hausfeld, Norbert

(57) **Zusammenfassung**

Die Erfindung betrifft ein Hörgerät (10, 10') mit einem Hörgerätegehäuse (15), in dem eine Sendeeinrichtung (21, 25) zur Übertragung von Information enthaltenen Signalen auf eine außerhalb des Hörgerätes (10,10') befindliche Empfangseinrichtung (39) angeordnet ist, wobei die Sendeeinrichtung (21, 25) zur Erzeugung eines optischen Signals im sichtbaren oder außerhalb des sichtbaren Spektralbereichs ausgebildet ist und ein Signalerzeugungsmittel (25) zur Erzeugung des optischen Signals und ein Modulationsmittel (21) zur Aufprägung von Information auf das optische Signal aufweist, wobei das Hörgerätegehäuse (15) ein Signalaustrittsfenster (18, 18') aufweist, das für das optische Signal transparent ausgebildet ist und durch das das Signal hindurchtreten kann, wobei das Fenster (18) eine dem Hörgerätegehäuseinneren zugewandte Eintrittsfensterfläche und eine der Außenkontur des Hörgerätegehäuses (15) angepasst geformte Austrittsfensterfläche hat, so dass das Hörgerät (10, 10') im Fensterbereich außenseitig im wesentlichen stufenlos ausgebildet ist, wobei das Signalerzeugungsmittel (25) eine Abstrahlrichtung (26) aufweist und beabstandet vom Signalaustrittsfenster (18, 18') angeordnet ist, und ist dadurch gekennzeichnet, dass die Abstrahlrichtung (26) des Signalerzeugungsmittels (25) und die Flächennormale (18a) der Austrittsfensterfläche (18, 18') um einen von Null abweichenden Winkel gegeneinander verkippt sind, und zwischen dem Signalerzeugungsmittel (25) und dem Fenster (18, 18') ein Signalleiter (17, 47) derart angeordnet ist, dass das optische Signal mittels des Signalleiters (17. 47) zum Signalaustrittsfenster (18, 18') so geführt ist, dass die Austrittsrichtung des optischen Signals gegenüber der Abstrahlrichtung (26) des Signalerzeugungsmittels (25) in Richtung auf die Flächennormale (18a) der Austrittsfensterfläche (18, 18') gedreht ist. Weiterhin betrifft die Erfindung ein Ladesystem (10, 10', 30) bestehend aus einer Ladestation (30) und einem erfindungsgemäßen Hörgerät (10, 10'.

## Beschreibung

Die Erfindung betrifft ein Hörgerät mit optischer Signalübertragung nach Anspruch 1 sowie eine Ladesystem mit optischer Signalübertragung nach Anspruch 10.

Es ist aus dem Stand der Technik bekannt, in einem Hörgerät anfallende Informationen nach außen auf Peripheriegeräte wie z.B. Lade-, Programmier- oder Diagnosegeräte zu übertragen, z.B. um aus diesen Informationen Rückschlüsse über den Betriebszustand des Hörgerätes abzuleiten. Insbesondere ist es bei Hörgeräten mit wiederaufladbaren Akkumulatoren bekannt, während des Aufladevorganges z.B. die Spannung am Akkumulator zu messen, diese Spannungsinformation nach außen zum externen Ladegerät zu übertragen, und mittels der übertragenen Informationen den Ladeprozess optimiert zu steuern. Die Übertragung der Information kann z.B. leitungsgebunden erfolgen, indem ein Ladekabel an das Hörgerät angeschlossen wird, über das nicht nur ein Ladestrom zugeführt wird, sondern auch die im Hörgerät ermittelten Informationen zurückübertragen werden. Die US 2006/0256989 beschreibt ein solches Hörgerät, an das ein Ladegerät angeschlossen werden kann. Es ist dort auch erläutert, dass und mit welchen Vorteilen der Ladeprozess des Akkumulators gesteuert wird anhand der Ladeinformationen, die am Akkumulator im Hörgerät ermittelt und dem Ladegerät zugeführt werden.

Moderne Hörgeräte werden in der Regel berührungslos aufgeladen, wie dies z.B. in der DE 297 18 104 U1 gezeigt ist. Bei diesen Hörgeräten sollte auch die Informationsübertragung kabellos erfolgen, um insgesamt das gerade bei zunehmender Miniaturisierung der Hörgeräte beschwerliche Anschließen von Kabeln entbehrlich zu machen.

Die EP 0 909 113 A2 zeigt z.B. ein induktiv aufladbares Hörgerät mit einer Sendespule im Ladegerät und einer Empfangsspule im Hörgerät, bei dem der wiederaufladbare Akkumulator des Hörgerätes mit einem Spannungsmessgerät verbunden ist. Die gemessenen Spannungswerte werden induktiv vom Hörgerät nach außen auf das Ladegerät übertragen, und anhand der übertragenen Informationen wird der Ladeprozess gesteuert. Die induktive Übertragung erfolgt mittels der für die Energieübertragung bereits vorgesehenen Sende- und Empfangsspulen. Einen ähnlichen Stand der Technik stellt die DE 10 2008 023 352 A1 dar, die für die Energie- und die Signalübertragung eine Antenne zum drahtlosen Senden und Empfangen von elektromagnetischen Signalen aufweist. Es wird als nachteilig bei diesem Stand der Technik angesehen, dass die Übertragung störanfällig ist, da das Hörgerät sich in einem externen Magnetfeld befindet. Die gattungsgemäße optische Übertragung erweist sich auch als preisgünstiger, da keine zusätzliche Sendespule erforderlich ist und kein hoher Entstörungsaufwand zu betreiben ist.

Eine akustische Informationsübertragung zwischen Hörgerät und Ladegerät zeigt die US 7,620,195 B2. Es wird als nachteilig angesehen, dass hierfür vergleichsweise fehler- und durch externe akustische Störungen beeinflussbare zusätzliche akustische Sende- und Empfangselemente verwendet werden müssen.

Ein gattungsgemäßer Stand der Technik mit optischer Signalübertragung ist aus der EP 1 727 395 B 1 bekannt. Neben anderen alternativen Informationsübertragungsmethoden, die dem obigen Stand der Technik entsprechen, wird auch vorgeschlagen, eine Lichtquelle im Hörgerät und einen Phototransistor im Ladegerät anzuordnen, und die Lichtquelle ein moduliertes Signal abstrahlen zu lassen, das nach Empfang durch den Phototransistor demoduliert wird. Weitere Details zu dieser optischen Signalübertragung und zur Anordnung von optischem Sender und optischem Empfänger offenbart dieses Dokument nicht.

Eine optische Schnittstelle zwischen einem Hörgerät und einem externen Gerät zeigt die DE 10 2005 020 322. Es sind dazu auf der Außenseite des Hörgerätes mehrere in dessen Gehäuse eingelassene lichtemittierende Dioden (LEDs) angeordnet, denen auf Seiten des externen Gerätes korrespondierend Empfangsdioden gegenüberstehen. Diese optische Schnittstelle stellt im Grunde einen optischen Stecker dar. Als nachteilig wird die aufwendige Konstruktion, die Verschmutzungsempfindlichkeit und der Platzbedarf angesehen. Es muss auch eine genaue Ausrichtung zwischen den mehreren nebeneinander angeordneten Sendern und Empfängern gewährleistet sein.

Es ist die Aufgabe der vorliegenden Erfindung, ein Hörgerät mit optischer Signalübertragung bereit zu stellen, das den beengten Platzverhältnissen in einem Hörgerät Rechnung trägt und die aufgezeigten Nachteile beseitigt.

Gelöst wird diese Aufgabe mit einem Hörgerät nach den Merkmalen des Anspruchs 1 sowie durch ein Ladesystem nach den Merkmalen des Anspruchs 10. Weitere vorteilhafte Ausgestaltungen sind Gegenstand der Unteransprüche.

Nach dem Stand der Technik ist vorgesehen, dass ein hörgeräteseitiger optischer Sender und ein externer optischer Empfänger so zueinander ausgerichtet sind, dass das vom Sender emittierte optische Signal auf den Empfänger fällt. Besonders deutlich zeigt dies die DE 10 2005 020 322. Der optische Sender muss daher eine bestimmte Anordnung und Ausrichtung im Hörgerät in Bezug auf den externen optischen Empfänger haben. Es ist dadurch nicht möglich, den Sender z.B. beliebig an einer aus Platzgründen bevorzugten Position anzuordnen, z.B. auf einer in der Regel ohnehin vorzusehenden Schaltungsplatine im Hörgeräteinneren, auf der einige oder alle benötigten elektronischen Komponenten des Hörgerätes angeordnet sind. Diese Möglichkeit eröffnet die erfindungsgemäße Konstruktion, indem zusätzlich zu dem optischen Sender im Hörgerät ein Signalleiter angeordnet wird, der das vom Sender emittierte optische Signal zu einem Signalaustrittsfenster im Hörgerätegehäuse führt. Der Sender kann dadurch an eine beliebige Position im Hörgerät angeordnet werden, insbesondere auf einer Schaltungsplatine, auf der auch andere elektronische Hörgerätekomponenten angeordnet sind. Die Erfindung ermöglicht also konstruktive Freiheiten hinsichtlich der Anordnung der erforderlichen optischen Sende- und Empfangsmittel.

Der Signalleiter hat die Funktion, das vom optischen Sender in einer Abstrahlrichtung emittierte Signal aufzunehmen und dem Signalaustrittsfenster im Hörgerätegehäuse zuzuführen. Dabei soll der Signalleiter das Signal so führen, dass der Signalaustritt aus dem Signalaustrittsfenster in Richtung auf den optischen Empfänger erfolgt, indem die Signalausbreitungsrichtung während der Führung im Signalleiter geändert wird von der ursprünglichen Ausbreitungsrichtung des vom Sender emittierten Signale zu einer Austrittsrichtung am Signalaustrittsfenster.

Erfindungsgemäß erfolgt die Informationsübertragung über ein optisches Signal. Dieses optische Signal kann synonym auch als "Licht" bezeichnet werden, der Signalleiter z.B. auch als Lichtleiter, das Signalaustrittsfenster als Lichtaustrittsfenster etc. Unter dem optischen Signal bzw. unter Licht ist aber nicht nur der sichtbare (VIS) optische Spektralbereich, sondern auch der bei höheren Wellenlängen liegende infrarote (IR) Spektralbereich und der bei kleineren Wellenlängen liegende ultraviolette (UV) Spektralbereich mit umfasst.

Bevorzugt wird Licht im infraroten Spektralbereich verwendet, z.B. bei einer Peak-Wellenlänge von 950 nm. Vorteile hat dieser Wellenlängenbereich, da so Störungen durch den sichtbaren Strahlenbereich des Tageslichtes oder von Neonleuchten oder anderen Quellen künstlichen Lichtes bei nicht geschlossener Ladestation vermeidbar sind. Zudem wird das Hörgerät im Tagesverlauf getragen und deshalb in der Regel nachts aufgeladen. Der Hörgeräteträger könnte sich bei Verwendung von sichtbarem Licht in den Nachtstunden gestört fühlen. Entsprechende Sender und Empfänger sind dabei in kleiner und günstiger Form auf dem Markt verfügbar, und geeignete Fenstermaterialien für das Signalaustrittsfenster sind ebenfalls im Stand der Technik bekannt.

Ein Signalleiter im Sinne der vorliegenden Erfindung kann z.B. eine Lichtleitfaser oder ein Lichtleitfaserbündel sein, die bzw. das von der Lichtquelle zum Lichtaustrittsfenster führt. Es kann z.B. eine Lichtleitfaser fasereingangsseitig auf einer das Lichtsignal erzeugenden, im Infraroten arbeitenden LED und faserausgangsseitig auf dem Lichtaustrittsfenster aufgeklebt sein. Es kann sich dabei aber auch um einen Spiegel oder um mehrere Spiegel handeln. Bevorzugt ist der Lichtleiter aber nach Anspruch 2 als starrer Lichtleiterkörper aus einem für das optische Signal transparentem Material mit einer Eintritts- und einer Austrittsfläche ausgebildet ist. Insbesondere mit den vorteilhaften Merkmalen des Anspruch 3 ergeben sich herstellungs- und montageseitig Vorteile, weil z.B. keine aufwendigen Montage-, Justier- oder Klebeschritte erforderlich sind, wie z.B. bei der Verwendung von Spiegeln oder Lichtleitfasern. Das Signal fällt auf die Eintrittsfläche der Lichtleiterkörpers und verläuft dann im Inneren bis zur Austrittsfläche. Diese beiden Flächen haben nicht-parallele Flächennormalen. Beim Eintritt in den Lichtleiterkörper wird das Licht aufgrund des Brechungsindexsprunges gebrochen, ggf. erfolgt eine weitere Brechung ausgangsseitig des Lichtleiterkörpers, z.B. weil der Lichtleiterkörper und das Lichtaustrittsfenster aus Materialien mit unterschiedlichem Brechungsindex hergestellt sind, oder ein Luftspalt dazwischen verbleibt. Das Material des Lichtleiterkörpers, und hier namentlich der Brechungsindex, und die Neigung der Eintrittsfläche zur Abstrahlrichtung sind so gewählt sind, dass die Brechung des optischen Signals zur Flächennormalen der Austrittsfensterfläche hin erfolgt, das Licht also in Richtung auf den externen Lichtempfänger gebrochen wird. Das Signal kann auf dem Weg von der Eintrittszur Austrittsfläche z.B. auch noch an Seitenflächen des Lichtleiterkörpers gespiegelt werden, die dazu z.B. mit einer verspiegelten Fläche versehen sind. Die Führung im Lichtleiterkörper kann aber auch ohne innere Reflexionen erfolgen, was wegen des damit verbundenen geringeren Lichtverlustes vorteilhaft ist.

Nach Anspruch 3 ist bevorzugt, dass das Licht- bzw. Signalaustrittsfenster im Hörgerätegehäuse den keilförmigen Lichtleiterkörper bildet. Es erstreckt sich dazu von seiner Austrittsfensterfläche keilförmig in Richtung auf das Lichterzeugungsmittel und seine Eintrittsfensterfläche liegt so in Abstrahlrichtung des Signalerzeugungsmittels, dass das emittierte Signal auf die Eintrittsfensterfläche trifft, in das Fenster eintritt, innerhalb des Fensters verläuft, und an der Austrittsfensterfläche wieder austritt. Bevorzugt erfolgt diese Führung im Fensterinnern dabei ohne Reflektion an den Seitenflächen des Fensters. Bei dieser Konstruktion fallen die in Anspruch 2 erwähnten Ein- und Austrittsflächen des Lichtleiterkörpers mit den Eintritts- und Austrittsfensterflächen zusammen, da das Signalaustrittsfenster den Lichtleiterkörper bildet. Der Vorteil liegt darin, dass Signalaustrittsfenster und Lichtleiterkörper einstückig hergestellt werden können und sich Monatageerleichterungen ergeben.

Die Herstellung ist besonders einfach, wenn das Signalaustrittsfenster nach Anspruch 4 aus einem für das optische Signal transparenten Kunststoff hergestellt ist. Geeignete Kunststoffe z.B. für IR-Licht sind im Stand der Technik hinlänglich bekannt. Es können z.B. transparentes Acryl (PMMA) oder transparentes ABS verwendet werden, z.B. das unter dem Handelsnamen Terlux bekannte Thermoplast, und hier insbesondere Terlux 2812. Auch andere aus dem Bereich der Kunststoffverscheibung verwendete Materialien kommen in Frage.

Eine weitere Verbesserung in der Herstellung und Montage ergibt sich mit den vorteilhaften Merkmalen nach Anspruch 5. Danach ist das Hörgerätegehäuse aus dem Fenstermaterial des Signalaustrittsfensters hergestellt, und das Hörgerätegehäuse und das Signalaustrittsfenster sind einstückig und das Signalaustrittsfenster ist als integraler Bestandteil des Hörgerätegehäuses ausgebildet. Es lässt sich also eine Baueinheit bestehend aus Hörgerätegehäuse, Signalaustrittsfenster und Lichtleiterkörper herstellen, weil alles aus einem Material und in einem Stück gefertigt ist. Es ist aber nicht ausgeschlossen, dass das Gesamtgehäuse des Hörgerätes mehrteilig ausgebildet ist. Vielmehr wird dies in der Regel sogar vorgesehen, um verschließbare Zugangsöffnungen für die Montage oder etwaige Reparaturen des Hörgerätes zu haben. In der Regel weist das Hörgerät z.B. ein zu öffnendes Batteriefach auf, um den Akkumulator einfach austauschen zu können. Anspruchsgemäß ist lediglich erforderlich, dass der Hörgerätegehäusebereich mit Signalaustrittsfenster und Lichtleiterkörper in einem Stück gefertigt ist. Nur dieser Bereich ist daher mit der Bezeichnung Hörgerätegehäuse gemeint. Natürlich kann das Hörgerätegehäuse insgesamt auch geschlossen ausgebildet sein, also insbesondere ohne Batterielade.

Aufgrund der einstückigen Ausbildung bestimmt die Materialwahl des Signalaustrittsfensters auch die Gehäuseeigenschaften des Hörgerätes. Um das Hörgerätegehäuse z.B. aus designerischen, aus Handhabungs- oder aus Beständigkeitsgründen zu verbessern werden die vorteilhaften Merkmale des Anspruchs 6 vorgeschlagen. Eine Erleichterung der Herstellung ist mit den vorteilhaften Merkmalen des Anspruchs 7 möglich.

Besonders vorteilhaft werden die Merkmale des Anspruchs 8 vorgeschlagen. Das optische Signal wird zur Übertragung von Ladeinformationen benutzt, indem ihm entsprechende Informationen aufgeprägt werden. Es kann z.B. die Signalhelligkeit oder die Frequenz moduliert werden, oder das Signal wird an- und ausgeschaltet, z.B. durch An- und Abschalten des optischen Senders, z.B. einer geeigneten LED, oder durch Blockierung des Strahlenganges durch eine sich öffnende und schließende Blende. Es kann z.B. die Spannung des Akkumulators von einem Spannungsmesser erfasst und diese Messergebnisse einer Modulatoreinheit zugeführt werden. Diese Modulatoreinheit kann dann diese Information dem optischen Signal aufprägen durch entsprechende Ansteuerung der LED oder im Strahlengang angeordneter Blockiermittel. Die Kommunikation zwischen Modulatoreinheit und Spannungsmesser kann einseitig sein, es werden z.B. lediglich Messwerte an die Modulatoreinheit geliefert.

Mit Vorteil sind die Merkmale des Anspruchs 9 vorgesehen. Das Zählmittel kann z.B. ein einfacher Speicher sein, in dem die Zahl der Ladezyklen abgelegt bzw. hochgezählt wird, bzw. die Zahl noch möglicher Zyklen abgelegt oder runtergezählt wird. Diese Information ist z.B. hilfreich, um rechtzeitig am Ladegerät durch geeignete Anzeigemittel wie ein Display oder Anzeige-LEDs anzuzeigen, dass der Akkumulator ausgetauscht werden sollte. Auch hier kann sich die Kommunikation darauf beschränken, dass die Modulatoreinheit diese Zahl z.B. aus dem Speicher ausliest bzw. empfängt. Es kann vom Ladegerät z.B. auch angezeigt werden, dass ein Service am Hörgerät durchgeführt werden sollte, z.B. um eine Reinigung, einen Filter-Tausch am Mikrofon oder auch einen Akkumulator-Tausch vorzunehmen.

Das Ladesystem nach Anspruch 10 besteht aus einer Ladestation und einem Hörgerät nach einem der Ansprüche 1 bis 9, wobei die Ladestation die Empfangseinrichtung und ein Demodulationsmittel aufweist zum Auslesen der dem Sendesignal aufgeprägten Information. Die Ladestation kann z.B. über geeignete Anzeigemittel verfügen, um die erhaltenen Informationen ganz oder teilweise für einen Nutzer zur Anzeige zu bringen, z.B. in Form eines Displays oder in Form von LEDs.

Nachfolgend soll die Erfindung anhand von zwei Ausführungsbeispielen weiter erläutert werden. Es zeigen:
- Fig. 1: in einer schematisch stark vereinfachten Darstellung ein erstes Ausführungsbeispiel eines erfindungsgemäßen Hörgeräts, und
- Fig. 2: in einer schematisch stark vereinfachten Darstellung ein zweites Ausführungsbeispiel eines erfindungsgemäßen Hörgeräts.

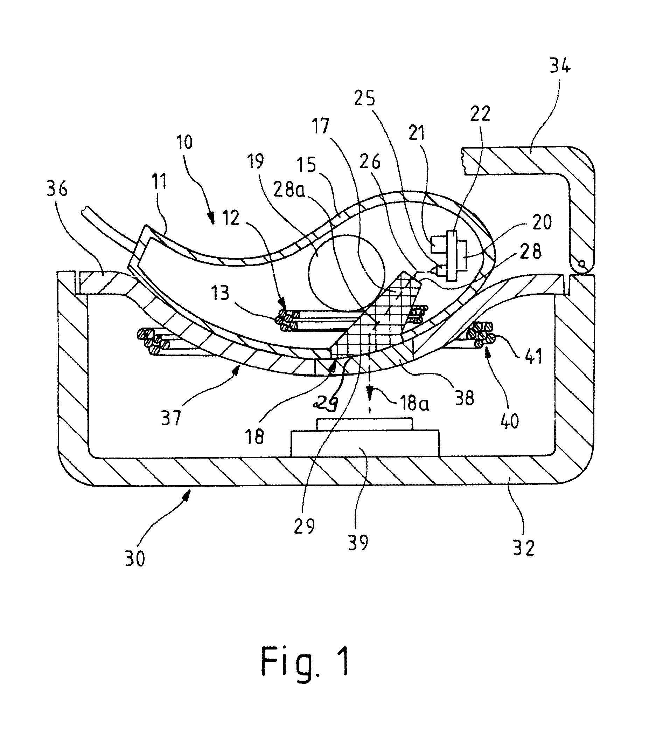

Die Fig. 1 zeigt ein erstes Ausführungsbeispiel für ein auf einer Ladestation 30 abgelegtes Hörgerät 10. Die Ladestation 30 besteht aus einem Gehäuseunterteil 32, an das gelenkig ein Gehäusedeckel 34 angebracht ist. Weiterhin weist das Gehäuse eine vom Gehäuseunterteil 32 gehaltene Aufnahmeschale 36 auf, die eine ein Hörgerät 10 aufnehmende und der Hörgerätekontur möglichst angepasste Aufnahme 37 aufweist, in der ein Fenster 38 ausgebildet ist. Unterhalb des Fensters 38 befindet sich eine Fotodiode 39, die im gezeigten Ausfiihrungsbeispiel z. B. für infrarotes Licht empfindlich ist. In nicht dargestellter Weise sind in der Ladestation 30 Auswerte- und Steuermittel angeordnet, um das Signal der Fotodiode 39 auszulesen und zu verarbeiten.

Die Hörgerätaufnahme 37 umgebend ist in der Ladestation 30 weiterhin eine Sendespule 40 angeordnet, in der Figur 1 angedeutet durch einige Drahtwicklungen 41. Nicht dargestellt sind die elektrischen und elektronischen Komponenten, um diese Sendespule 40 mit Strom zu beaufschlagen und die Übertragung von Energie über diese Sendespule 40 auf eine im Hörgerät 10 angeordnete Empfangsspule 12 mit Wicklungen 13 zu steuern. Ebenfalls nicht dargestellt ist die Stromversorgungsleitung, die von der Ladestation 30 zu einer externen Stromquelle führt, z. B. ein in üblicher Weise ausgebildeter Netzstecker.

Im dargestellten ersten Ausführungsbeispiel befindet sich ein Hörgerät 10 in der Ladestellung innerhalb der Ladestation 30. Es liegt dazu in der der Außenkontur des Hörgerätegehäuses 15 angepassten Aufnahme 37 der Ladestation 30. In dieser Stellung liegen sich das Fenster 38 der Ladestation 30 und ein im Hörgerätegehäuse 15 ausgebildetes Signalaustrittsfenster 18 so gegenüber, dass Licht vom Austrittsfenster 18 aus dem Hörgerät 10 auf die Photodiode 39 trifft. Die Aufnahmeschale 36 kann z.B. aus einem IR-durchlässigen Kunststoff bestehen und daher insgesamt als Fenster dienen.

Das Hörgerät 10 weist weiterhin einen wiederaufladbaren Akkumulator 19 auf. Die Aufladung soll gemäß dem Ausführungsbeispiel berührungslos erfolgen. Dazu ist in dem Hörgerät eine Empfangsspule 12 mit Spulenwindungen 13 so angeordnet, dass von der Sendespule 40 übertragene Energie induktiv aufgenommen und über eine geeignete Ladeschaltung 20 dem Akkumulator 19 zugeführt werden kann. Die Ladeschaltung 20 ist auf einer Trägerplatine 22 angeordnet, an der weiterhin eine Steuerung 21 sowie eine im infraroten Spektralbereich Licht emittierende Diode (LED) 25 angeordnet ist. Die Abstrahlrichtung 26 der LED 25 verläuft im gezeigten Ausfiihrungsbeispiel in etwa senkrecht zur Flächennormalen 18a des Austrittsfensters 18, so dass von der Diode 25 emittiertes Licht nicht direkt auf die Fotodiode 39 gelangen würde.

Im gezeigten Ausführungsbeispiel ist das Signalaustrittsfenster 18 auf seiner hörgeräteaußenseitigen Oberfläche bündig zum Hörgerätegehäuse 15 ausgebildet, während sich das Signalaustrittsfenster 18 hörgeräteinnenseitig keilförmig in Richtung auf die LED 25 hin erstreckt. Das keilförmig ausgebildete Fenster 18 weist eine Eintrittsfensterfläche 28 auf, die sich in der Abstrahlrichtung 26 der Diode 25 befindet und daher mit Infrarotlicht beaufschlagt wird. Weiterhin weist das keilförmig ausgebildete Fenster 18 eine Austrittsfensterfläche 29 auf, die bündig mit der Hörgeräteaußenseite abschließt. Die Eintrittsfensterfläche 28 ist gegenüber der Abstrahlrichtung 26 der Diode 25 gekippt, so dass bei Eintritt des Infrarotlichtes in diese keilförmige Verlängerung 17 des Signalaustrittsfensters 18 eine Brechung erfolgt. Das Fenstermaterial und der Kippwinkel der Eintrittsfläche 28 gegenüber der Abstrahlrichtung 26 der Diode 25 sind dabei so gewählt, dass die Brechung in Richtung auf die Fotodiode 39 erfolgt, bzw. in Richtung auf die Flächennormale 18a der Austrittsfensterfläche 29.

Es kann durch entsprechende Materialdotierung z. B. vorgesehen sein, dass das Infrarotlicht vor dem Austritt aus dem Austrittsfenster 18 noch einmal in Richtung auf die Fotodiode 39 gebrochen wird. Es kann aber auch z. B. durch unterschiedliche Materialwahl von Austrittsfenster 18 und Fenster 38 beim Übergang des Infrarotlichts eine weitere Brechung in Richtung auf die Fotodiode 39 erfolgen. Wenn keine solche Brechung mehr erforderlich ist, kann z. B. auch im Signalaustrittsfenster 18, insbesondere in der keilförmigen Verlängerung 17, eine Reflektion an Seitenflächen vorgesehen sein, die z. B. zu diesem Zweck mit einer entsprechenden spiegelnden Beschichtung versehen werden kann.

Die Leuchtdiode 25 wird angesteuert von der Steuereinrichtung 21, die dem kontinuierlichen Lichtsignal z. B. intensitätsmodulierend eine Information aufprägt. In Alternative dazu könnte die Leuchtdiode 25 auch von der Steuereinrichtung 21 informationsübermittelnd an- und ausgeschaltet werden oder in der Frequenz moduliert werden.

Die von der Steuereinrichtung 21 dem Infrarotlicht der Leuchtdiode 25 aufgeprägte Information kann z. B. Informationen zum Ladezustand des Akkumulators 19 enthalten. Die Steuereinrichtung 21 steht dazu in Verbindung mit der Ladeschaltung 20, um z. B. Informationen über den Spannungszustand des Akkumulators oder zum Ladestrom zu erhalten. Weiterhin kann die Steuereinrichtung 21 z. B. über einen Speicher verfügen, in dem die Zahl der Ladezyklen hinterlegt ist, oder eine Information darüber, wie viele Ladezyklen noch möglich sind. Auch diese Informationen kann die Steuereinrichtung 21 durch entsprechende Ansteuerung der Leuchtdiode 25 dem emittierten Infrarotlicht aufprägen.

Die Fotodiode 39 weist geeignete Demodulierungsmittel auf, um die dem empfangenen Infrarotlicht aufgeprägte Information auslesen zu können. Diese Information kann z. B. an die Steuerung der Sendespule 40 bzw. die Ladestromsteuerung weitergegeben werden, um die auf die Empfangsspule 12 übertragene elektrische Energie dem Ladezustand des Akkumulators 19 anzupassen.

Die hier lediglich zu Beispielszwecken genannte Informationsübertragung unter Verwendung von infrarotem Licht kann natürlich auch im sichtbaren oder ultravioletten Bereich erfolgen. Es sind eine Vielzahl geeigneter Leuchtdioden und Fotodioden im Stand der Technik bekannt, die in diesen alternativen Wellenlängenbereichen einsetzbar sind.

Im gezeigten Ausführungsbeispiel ist das Gehäuse 15 des Hörgerätes 10 aus dem gleichen Material hergestellt, wie das Signalaustrittsfenster 18. Insbesondere ist das Hörgerätgehäuse 11 inklusive Austrittsfenster 18 und keilförmiger Verlängerung 17 des Fensters 18 in Richtung auf die Leuchtdiode 25 einstückig ausgebildet, wobei dies auch umfassen soll, dass nicht das Signalaustrittsfenster betreffende Bereiche des Hörgerätegehäuses 15 entfernbar sind, z. B. um den Akkumulator 19 austauschen zu können oder um zu Reparatur- oder Einbauzwecken im Hörgerätinneren arbeiten zu können.

Weiterhin weist im dargestellten Ausführungsbeispiel das Hörgerätegehäuse 15 auf seiner Außenseite eine Beschichtung 11 auf, die sowohl Design- als auch Benutzungsansprüchen genügt. Lediglich der Bereich des Austrittsfensters 18 ist nicht mit dieser Beschichtung 11 versehen. Dies wird beispielsweise dadurch erreicht, dass nach einer vollständigen Beschichtung des aus einem transparenten Kunststoff hergestellten Hörgerätegehäuses 15 inklusive Signalaustrittsfenster 18 der Fensterbereich von der Beschichtung 11 anschließend wieder befreit wird, z. B. durch Laserbearbeitung. Es ist auch möglich, beim Beschichten den Fensterbereich durch vorheriges Maskieren zu schützen und nachfolgend die Maskierung zu entfernen.

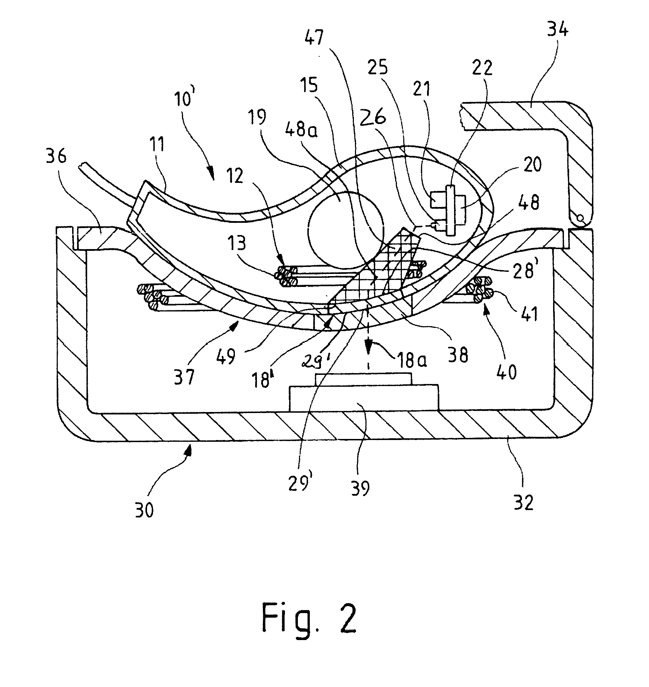

In der Fig. 2 ist ein zweites Ausführungsbeispiel für ein erfindungsgemäßes Hörgerät 10' dargestellt. Das in Fig. 2 dargestellte Ladegerät 30 ist identisch zu dem in der Fig. 1 dargestellten Ladegerät. Das in der Fig. 2 dargestellte Hörgerät 10' ist bis auf den Fensterbereich ebenfalls identisch zu dem in der Fig. 1 dargestellten Hörgerät 10. Aus diesem Grund wurden die Bezugszeichen für die identischen Komponenten für die Fig. 2 übernommen und nur für den abgewandelten Fensterbereich wurden neue Bezugszeichen vergeben. Im Folgenden wird der abgewandelte Fensterbereich des Hörgeräts 10' gemäß dem zweiten Ausführungsbeispiel diskutiert.

Das Hörgerät 10' gemäß dem zweiten Ausführungsbeispiel weist ebenfalls ein Signalaustrittsfenster 18' auf, das auf seiner hörgerätaußenseitigen Oberfläche, der Austrittsfensterfläche 29', bündig zu dem Hörgerätegehäuse 15 ausgebildet ist. Gegenüber dem in der Fig. 1 dargestellten Hörgerät 10 gemäß dem ersten Ausführungsbeispiel ist die Eintrittsfensterfläche 28' des Fensters 18' des Hörgerätes 10' gemäß dem zweiten Ausführungsbeispiel der hörgerätinnenseitigen Oberfläche des Hörgerätes 10' bündig angepasst. Der Eintrittsfensterfläche 28' anliegend ist ein Signalleiterkörper 47 angeordnet, der sich in Richtung der LED 25 erstreckt. Der Signalleiterkörper 47 kann z.B. auf die Eintrittsfensterfläche 28'aufgeklebt sein.

Der Signalleiterkörper 47 besteht aus einem transparaten Material und ist keilförmig ausgebildet, wobei das untere Keilende dem Signalaustrittsfenster 18' anliegt, und das verjüngte obere Ende zur LED 25 hin ausgerichtet ist. Der Signalleiterkörper 47 weist eine Eintrittsfläche 48 auf, die in der Abstrahlrichtung 26 der LED 25 angeordnet ist, so dass die Eintrittsfläche 48 mit Infrarotlicht bestrahlt wird. Weiterhin weist der Signalleiterkörper eine Austrittsfläche 49 auf, wobei die Flächennormale der Austrittsfläche 49 gegenüber der Flächennormalen 48a der Eintrittsfläche 48 gekippt ist.

Analog dem Ausführungsbeispiel in Figur 1 ist die Eintrittsfläche 48 des Signalleiterkörpers 47 gegenüber der Abstrahlrichtung 26 der Diode gekippt, so dass das in die Eintrittsfläche 48 eintretende Infrarotlicht im Signalleiterkörper 47 gebrochen wird. Dabei sind der Kippwinkel und das Material des Signalleiterkörpers 47 so gewählt, dass das Infrarotlicht in Richtung auf die Flächennormale der Austrittsfläche 49 hin gebrochen wird.

## Patentansprüche

1. Hörgerät (10, 10') mit einem Hörgerätegehäuse (15), in dem eine Sendeeinrichtung (21, 25) zur Übertragung von Information enthaltenen Signalen auf eine außerhalb des Hörgerätes (10, 10') befindliche Empfangseinrichtung (39) angeordnet ist, wobei die Sendeeinrichtung (21, 25) zur Erzeugung eines optischen Signals im sichtbaren oder außerhalb des sichtbaren Spektralbereichs ausgebildet ist und ein Signalerzeugungsmittel (25) zur Erzeugung des optischen Signals und ein Modulationsmittel (21) zur Aufprägung von Information auf das optische Signal aufweist, wobei das Hörgerätegehäuse (15) ein Signalaustrittsfenster (18, 18') aufweist, das für das optische Signal transparent ausgebildet ist und durch das das Signal hindurchtreten kann, wobei das Signalaustrittsfenster (18, 18') eine dem Gehäuseinneren zugewandte Eintrittsfensterfläche (28, 28') hat, durch die das Signal in das Signalaustrittsfenster (18, 18') eintritt, und eine der Außenkontur des Hörgerätegehäuses (15) angepasst geformte Austrittsfensterfläche (29, 29'), durch die das Signal aus dem Signalaustrittsfenster (18, 18') wieder austritt, wobei das Signalerzeugungsmittel (25) eine Abstrahlrichtung (26) aufweist und beabstandet vom Signalaustrittsfenster (18, 18') angeordnet ist, **dadurch gekennzeichnet, dass** die Abstrahlrichtung (26) des Signalerzeugungsmittels (25) und die Flächennormale (18a) der Austrittsfensterfläche (29, 29') um einen von Null abweichenden Winkel gegeneinander verkippt sind, und zwischen dem Signalerzeugungsmittel (25) und der Austrittsfensterfläche (29, 29') ein Signalleiter (17, 47) derart angeordnet ist, dass das optische Signal mittels des Signalleiters (17, 47) zur Austrittsfensterfläche (29, 29') so geführt ist, dass die Austrittsrichtung des optischen Signals gegenüber der Abstrahlrichtung (26) des Signalerzeugungsmittels (25) in Richtung auf die Flächennormale (18a) der Austrittsfensterfläche (29) gedreht ist.

2. Hörgerät (10, 10') nach Anspruch 1, **dadurch gekennzeichnet, dass** der Signalleiter als starrer Signalleiterkörper (17, 47) aus einem für das optische Signal transparentem Material mit einer Eintritts- (28, 48) und einer Austrittsfläche (29, 49) ausgebildet ist, wobei die Flächennormalen der Austrittsfläche (29, 49) und der Eintrittsfläche (28, 48) des Signalleiterkörpers (17, 47) gegeneinander verkippt sind und der Signalleiterkörper (17, 47) so angeordnet und dimensioniert ist, dass die Eintrittsfläche (28, 48) in Abstrahlrichtung (26) des Signalerzeugungsmittels (25) liegt und vom emittierten Signal beaufschlagbar ist, wobei das Material und die Flächennormale der Eintrittsfläche (28, 48) so gewählt sind, dass das optische Signal an der Eintrittsfläche (28, 48) zur Flächennormalen (18a) der Austrittsfensterfläche (29, 29') hin gebrochen wird.

3. Hörgerät (10) nach Anspruch 2, **dadurch gekennzeichnet, dass** das Signalaustrittsfenster (18) den starren Signalleiterkörper (17) bildet, indem es sich von seiner Austrittsfensterfläche (29) in Richtung auf das Signalerzeugungsmittel (25) erstreckt und seine Eintrittsfensterfläche (28) in Abstrahlrichtung (26) des Signalerzeugungsmittels (25) und vom emittierten Signal beaufschlagbar angeordnet ist.

4. Hörgerät (10, 10') nach einem der vorhergehenden Ansprüche 1 bis 3, **dadurch gekennzeichnet, dass** das Signalaustrittsfenster (18, 18') aus einem für das optische Signal transparenten Kunststoff hergestellt ist.

5. Hörgerät (10, 10') nach einem der vorhergehenden Ansprüche, **dadurch gekennzeichnet, dass** das Hörgerätegehäuse (15) aus dem Fenstermaterial hergestellt ist, und das Hörgerätegehäuse (15) und das Signalaustrittsfenster (18, 18') einstückig und das Signalaustrittsfenster (18, 18') als integraler Bestandteil des Hörgerätegehäuses (15) ausgebildet sind.

6. Hörgerät (10, 10') nach Anspruch 5, **dadurch gekennzeichnet, dass** die Oberfläche des Hörgerätegehäuses (15) unter Freilassung des Signalaustrittsfenster (18, 18') lackiert oder beschichtet oder bedruckt ist.

7. Hörgerät (10, 10') nach Anspruch 6, **dadurch gekennzeichnet, dass** das Hörgerätegehäuse (15) hergestellt ist durch vollständige Lackierung oder Beschichtung oder Bedruckung und anschließendes Befreien des Signalaustrittsfensters (18, 18') von der Lackierung, Beschichtung oder Bedruckung (11).

8. Hörgerät (10, 10') nach einem der vorhergehenden Ansprüche, wobei das Hörgerät (10, 10') einen wiederaufladbaren Akkumulator (19) und eine Ladeschaltung (20) mit berührungslos arbeitenden Energieempfangsmitteln (12) und mit Erfassungsmitteln zur Erfassung des Ladezustands des Akkumulators (19) aufweist, **dadurch gekennzeichnet, dass** das Modulationsmittel (21) kommunizierend mit den Erfassungsmitteln in Verbindung steht und dem Signal Informationen zum Ladezustand aufprägend ausgebildet ist.

9. Hörgerät (10, 10') nach einem der vorhergehenden Ansprüche, **dadurch gekennzeichnet, dass** im Hörgerät (10, 10') Zählmittel zum Erfassen der Zahl der Ladezyklen oder noch verbleibender Ladezyklen aufweist, wobei das Modulationsmittel (21) kommunizierend mit dem Zählmittel in Verbindung steht und dem Signal Informationen zur Zahl der Ladezyklen oder zu noch verbleibenden Ladezyklen aufprägend ausgebildet ist.

10. Ladesystem (10, 10', 30) bestehend aus einer Ladestation (30) und einem Hörgerät (10, 10') nach einem der vorhergehenden Ansprüche 1 bis 9, wobei die Ladestation (30) die Empfangseinrichtung und Demodulationsmittel (39) aufweist zum Auslesen der dem Sendesignal aufgeprägten Information.
